# EUROPÄISCHE PATENTSCHRIFT

(11) **EP 2 063 266 B1**
(45) Veröffentlichungstag und Bekanntmachung des Hinweises auf die Patenterteilung: **22.10.2014**
(21) Anmeldenummer: 07022420.9
(22) Anmeldetag: 19.11.2007
(51) Int. Cl.: G01N 27/72, G01N 27/82

(54) **Spannungsunabhängige Mikrogefügecharakterisierung**
Strain-independent microstructure characterisation
Caractérisation de microstructure indépendante de la tension

(43) Veröffentlichungstag der Anmeldung: 27.05.2009
(73) Patentinhaber: Fraunhofer-Gesellschaft zur Förderung der angewandten Forschung e.V., 80686 München (DE)
(72) Erfinder: Altpeter, Iris, Dr.-Ing., 66123 Saarbrücken (DE); Szielasko, Klaus, Dipl.-Ing. (FH), 66125 Saarbrücken (DE)
(74) Vertreter: Pfenning, Meinig & Partner GbR

(56) Entgegenhaltungen:
- EP-A- 0 683 393
- EP-A- 1 767 932
- "Eigenspannungen und Verzug durch Wärmeeinwirkung, Kapitel 7.2: Mikromagnetische Ermittlung von thermisch induzierten Eigenspannungen in Stählen und weissem Gusseisen" [Online] 1999, WILEY-VCH VERLAG , WEINHEIM , XP002477186 ISBN: 3-527-27143-0 Gefunden im Internet: URL:www3.interscience.wiley.com/cgi-bin/bo oktext/114029440/BOOKPDFSTART> [gefunden am 2008-04-18] * Seiten 407-426 *

## Beschreibung

Die Erfindung betrifft ein Verfahren zur zerstörungsfreien Werkstoffprüfung unter Anwendung elektromagnetischer Prüfverfahren. Mit Hilfe dieses Verfahrens kann der Mikrogefügezustand von Stählen unabhängig vom Eigenspannungszustand ermittelt werden.

Mechanische Spannungen besitzen einen erheblichen Einfluss auf die Prüfgrößen elektromagnetischer Prüfverfahren. In den Prüfgrößen spiegeln sich die überlagerten Einflüsse des Gefüges und der Spannungen wider.

In ;,Eigenspannungen und Verzug durch Wärmeeinwirkung" [Online] 1999, WILEY-VCH Verlag, Weinheim, ISBN: 3-527-27143-0, URL: www3.interscience.wiley.com/cgi-bin/booktext/114029440/BOOKPDFSTART, Seiten 407-425 wird eine Vorrichtung zur Ermittlung von thermisch induzierten Eigenspannungen beschrieben, welches auf der lastspannungsabhängigen Messung von Barkhausenrauschen basiert. Die Vorrichtung ermöglicht die Erfassung der mikromagnetischen Prüfgrößen bei Variation der Temperatur unter gleichzeitiger Zugbelastung.

Die EP 0 683 393 A1 beschreibt ein Verfahren zur zerstörungsfreien Werkstoffprüfung von Fe-C-Stahl und Gusseisen unterschiedlicher Legierungsgehalte unter Anwendung des magnetischen Barkhausenrauschens mit Messung der Barkhausenrauschamplitude M_{Max} an einer Werkstoffprobe. Hierbei wird die Probe bis über die Curie-Temperatur der Zementitphase erwärmt und M_{Max} in Abhängigkeit von der Probentemperatur gemessen. Die Curie-Temperatur wird durch Ermittlung des Minimums der M_{Max}-Kurve bestimmt.

Die Kalibrierung des Prüfverfahrens erfolgt häufig über multiple Regression, d.h. linear unabhängige Prüfgrößen werden in einem polynomialen Ausdruck miteinander verknüpft, um Näherungswerte für eine Zielgröße zu bestimmen (z.B. mechanische Härte oder Härtetiefe). Ist bei der Messung des Gefügezustandes der überlagerte Störeinfluss der Spannungen bereits in den zur Kalibrierung genutzten Messdaten vorhanden, wird der Spannungseinfluss eliminiert. Hierdurch verliert man aber auch einen Großteil des Messeffektes. In solchen Fällen, wo die Spannung als Zielgröße betrachtet wird, stellen die Gefügeeinflüsse Störgrößen dar und man steht vor einer ähnlichen Problematik wie gerade für den umgekehrten Fall ausgeführt.

Es ist daher Aufgabe der vorliegenden Erfindung, ein Verfahren anzugeben, mit denen eine spannungsunabhängige Gefügecharakterisierung zerstörungsfrei möglich ist.

Diese Aufgabe wird gelöst durch das Verfahren zur Charakterisierung des Mikrogefügezustandes eines Materials nach Anspruch 1 und das Verfahren zum Vergleich der Mikrogefügezustände zumindest zweier Materialien nach Anspruch 9. Vorteilhafte Weiterbildungen der erfindungsgemäßen Verfahren werden durch die jeweiligen abhängigen Ansprüche gegeben.

Wird an ein mit einer Spannung bzw. Lastspannung beaufschlagtes Material ein Magnetfeld angelegt, so können verschiedene Messgrößen bestimmt werden, die von der Feldstärke des angelegten Magnetfeldes abhängen. Solche Messgrößen können z.B. die magnetische Flussdichte oder die Überlagerungspermeabilität sein. Im Allgemeinen hängen diese Messgrößen von der Lastspannung ab, mit der das Material beaufschlagt wurde, ihr Wert ist also bei gleicher Magnetfeldstärke für unterschiedliche Lastspannungen unterschiedlich.

Erfindungsgemäß wurde nun erkannt, dass es für diese Messgrößen zumindest eine charakteristische magnetische Feldstärke gibt, bei welcher die Messgröße oder eine aus der Messgröße abgeleitete Größe für zumindest zwei der Lastspannungen oder alle angelegten Lastspannungen einen im Wesentlichen gleichen Wert hat. Die Kurven der Messgröße in Abhängigkeit von der magnetischen Feldstärke oder der aus der Messgröße abgeleiteten Größe in Abhängigkeit von der magnetischen Feldstärke überschneiden sich also bei der charakteristischen magnetischen Feldstärke für zumindest zwei an das Material angelegte Lastspannungen, im Wesentlichen in einem Punkt oder in einem kleinen Bereich.

Durch diese charakteristische magnetische Feldstärke und/oder den im Wesentlichen gleichen Wert der Messgröße oder der aus der Messgröße abgeleiteten Größe kann der Mikrogefügezustand des untersuchten Materials charakterisiert werden.

Erfindungsgemäß wird daher ein Verfahren zur Charakterisierung des Mikrogefügezustandes eines Materials angegeben. Hierbei wird das Material zumindest bereichsweise mit zumindest zwei Lastspannungen unterschiedlicher Beträge beaufschlagt. Hierbei soll der Fall umfasst sein, dass der Betrag einer der beiden Lastspannungen Null ist.

An das mit den Lastspannungen beaufschlagte Material wird dann ein variierendes bzw. variables Magnetfeld angelegt und für jede der zumindest zwei Lastspannungen zumindest eine Messgröße in Abhängigkeit von der Feldstärke des angelegten Magnetfeldes aufgenommen. Es ergibt sich also für jede Lastspannung, mit welcher das Material zumindest bereichsweise beaufschlagt wird, die Funktion der Messgröße in Abhängigkeit von der magnetischen Feldstärke.

Durch Vergleich der für die unterschiedlichen Lastspannungen aufgenommenen Messgrößen in Abhängigkeit von der angelegten magnetischen Feldstärke kann nun eine magnetische Feldstärke bestimmt werden, bei welcher die Messgröße und/oder eine aus der Messgröße abgeleitete Größe für zumindest zwei der angelegten Lastspannungen oder für alle der Lastspannungen einen im Wesentlichen gleichen Wert hat. Die so bestimmte magnetische Feldstärke ist für den Mikrogefügezustand des Materials charakteristisch. Aus dem Wert dieser charakteristischen magnetischen Feldstärke kann also auf den Mikrogefügezustand des untersuchten Materials im untersuchten Bereich geschlossen werden. Die charakteristische magnetische Feldstärke und/oder die Messgröße und/oder die aus der Messgröße abgeleitete Größe sind also für verschiedene Lastspannungen gleich, aber für verschiedene Mikrogefügezustände unterschiedlich. Erfindungsgemäß wird daher der Mikrogefügezustand durch diesen Wert charakterisiert. Zur Charakterisierung kann auch der Wert der Messgröße bei der charakteristischen Magnetfeldstärke oder der Wert einer aus dieser Messgröße abgeleiteten Größe verwendet werden, welche für die angelegten Lastspannungen bei der charakteristischen magnetischen Feldstärke den gleichen Wert hat.

Besonders geeignet, weil leicht zu messen, ist es, wenn die Messgröße die magnetische Flussdichte im mit der Lastspannung beaufschlagten Bereich ist. Die Funktion der magnetischen Flussdichte in Abhängigkeit von der magnetischen Feldstärke ist gerade die Hysteresekurve. Die bei verschiedenen Lastspannungen aufgenommenen Hysteresekurven schneiden sich in zwei Punkten. Diese Punkte sind also für alle angelegten Lastspannungen identisch und können daher beide zur Charakterisierung des Mikrogefügezustandes dienen.

Hier hängt also die charakteristische magnetische Feldstärke und der im Wesentlichen gleiche Wert der Messgröße von dem Mikrogefügezustand ab, so dass dieser durch diese Werte bestimmt und charakterisiert werden kann.

Alternativ oder zusätzlich kann als Messgröße zur Charakterisierung die Überlagerungspermeabilität im mit der Lastspannung beaufschlagten Bereich dienen. Die bei verschiedenen Spannungen gemessenen Werte der Überlagerungspermeabilität sind für eine bestimmte Feldstärke im Wesentlichen gleich. Dieser im Wesentlichen gleiche Wert wird für eine charakteristische magnetische Feldstärke sowie für deren negativen Wert angenommen. Es gibt also zwei charakteristische Feldstärken mit gleichem Betrag.

Es ist nicht notwendig, dass die Werte der Überlagerungspermeabilität exakt gleich sind, auch ein im Wesentlichen gleicher bzw. ähnlicher Wert kann zur Charakterisierung des Mikrogefügezustandes dienen. In einem solchen Fall kann z.B. der Mittelwert verschiedener Werte zur Charakterisierung des Mikrogefügezustandes verwendet werden.

Wie bereits beschrieben, muss die Charakterisierung des Mikrogefügezustandes nicht unbedingt über die Messgröße selbst erfolgen, sondern kann auch durch eine aus der Messgröße abgeleitete Größe erfolgen. In einer solchen Konstellation kann als Messgröße das Barkhausenrauschen und/oder die Magnetostriktion im mit der Lastspannung beaufschlagten Bereich in Abhängigkeit von der magnetischen Feldstärke gemessen werden. Aus dem Barkhausenrauschen und der Magnetostriktion können jeweils einzeln oder in Kombination Größen abgeleitet werden, deren Werte bei bestimmten magnetischen Feldstärken übereinstimmen. Besonders geeignet ist es, aus dem Barkhausenrauschen und/oder der Magnetostriktion die magnetische Flussdichte oder einen bestimmten Punkt der magnetischen Hysteresekurve abzuleiten. In Frage kommt z.B. die Koerzitivfeldstärke (Nullstelle der Hysteresekurve) oder die Fläche unter der Hysteresekurve. Auch kann die Überlagerungspermeabilität oder ein bestimmter Punkt der Überlagerungspermeabilitätskurve aus diesen Messgrößen abgeleitet werden.

Grundsätzlich sind sämtliche elektromagnetischen Prüfgrößen sowohl gefüge- als auch spannungsempfindlich. Die Gefüge- und Spannungsempfindlichkeit beruht auf der Wechselwirkung der Blochwände mit Mikrogefügeparametern (Versetzungen, Ausscheidungen) bzw. Eigenspannungsfeldern. Die aus dem magnetischen Barkhausenrauschen abgeleitete Prüfgröße "Koerzitivfeldstärke" (H-Feldlage des Rauschmaximums) korreliert beispielsweise für die Mehrzahl der technischen Stähle gut mit der mechanischen Härte.

Die Charakterisierung des Mikrogefügezustandes kann dann wiederum über den Wert des Magnetfeldes, bei dem Barkhausenrauschen, Magnetostriktion, magnetische Flussdichte und/oder die Überlagerungspermeabilität den gleichen Wert haben erfolgen. Auch durch den Wert der entsprechenden Größe kann die Charakterisierung erfolgen.

Vorzugsweise durchsetzt das angelegte Magnetfeld den mit der entsprechenden Lastspannung beaufschlagten Bereich des Materials. Das bedeutet, dass das magnetische Feld seinen im oben beschriebenen Verfahren verwendeten Wert im mit der entsprechenden Lastspannung beaufschlagten Bereich annimmt. Besonders bevorzugt ist es hierbei, dass sich dieser Wert des Magnetfeldes über den Bereich, in welchem die Messgröße bestimmt wird, im Wesentlichen nicht ändert.

Wie bereits beschrieben, kann eine der Lastspannungen, bei welchen die Messungen vorgenommen werden, den Wert Null haben. Dies ist bevorzugt, weil hierdurch das Verfahren besonders einfach durchgeführt werden kann, indem das zu untersuchende Material nur einmal mit einer Lastspannung beaufschlagt wird.

Lastspannungen können vorzugsweise besonders einfach durch Zugeigenspannungsfelder realisiert werden.

Zugspannungen entstehen, wenn man den Werkstoff durch Ziehen mechanisch belastet. Da diese Belastung nicht auf einen bestimmten Punkt konzentriert ist, ergibt sich stets eine räumliche Verteilung der Spannungen, was man als Spannungsfeld bezeichnet. Zugeigenspannungsfelder sind nun diejenigen Zugspannungsfelder, die bereits ohne äußere Belastung im Werkstoff vorliegen.

Besonders schnell und einfach können Lastspannungen mittels eines Lasers auf das zu untersuchende Material beaufschlagt werden. Hierbei wird die zumindest eine Lastspannung dadurch beaufschlagt, dass das zu untersuchende Material mittels eines Lasers in einem Bereich erwärmt wird und anschließend abgekühlt oder abkühlen gelassen wird. Durch die lokale Erwärmung und die anschließende Abkühlung infolge Wärmeableitung ins umgebende Material entsteht, wenn der Martensitpunkt in der laserbehandelten Zone nicht erreicht wird, ein Zugeigenspannungsfeld im erhitzten Bereich.

Die Größe der entstehenden Zugeigenspannung resultiert aus der Differenz der Streckgrenzen im heißen und kalten Zustand des Probenmaterials. Die beispielsweise durch eine CO₂-Laserbestrahlung bedingte thermische Ausdehnung im bestrahlten Bereich kann sich bei Abkühlung der Probe nicht zurückbilden, da das umgebende Material wie eine Einspannung wirkt. Dies führt zur Ausbildung von Zugeigenspannungen. Die oben genannten Verfahren dienen zur Charakterisierung des Mikrogefügezustandes eines Materials. Das bedeutet, dass der zur Charakterisierung verwendete Wert der magnetischen Feldstärke, der Messgröße oder der aus der Messgröße abgeleiteten Größe den Mikrogefügezustand definiert. Hierbei wird ausgenutzt, dass der entsprechende Wert, wie beschrieben, nicht von der Lastspannung abhängt, für unterschiedliche Mikrogefügezustände jedoch verschieden ist.

Durch eine solche Charakterisierung ist daher auch ein Vergleich der Mikrogefügezustände mehrerer Materialien möglich. Die Erfindung umfasst daher auch ein Verfahren zum Vergleich der Mikrogefügezustände zumindest zweier Materialien. Hierbei wird der Mikrogefügezustand jedes Materials des Vergleichs nach dem oben beschriebenen Verfahren charakterisiert und anschließend die hierbei zur Charakterisierung verwendeten Werte der Materialien miteinander verglichen. Bevorzugterweise wird das Verfahren zur Charakterisierung für alle zu vergleichenden Materialien mit den gleichen Werten und Messgrößen oder abgeleiteten Größen durchgeführt. Ein Vergleich ist jedoch auch möglich, wenn unterschiedliche Größen zur Charakterisierung verwendet werden, die ineinander überführbar oder umrechenbar sind.

Das erfindungsgemäße Verfahren ist in einer Vorrichtung zur Charakterisierung von Mikrogefügezuständen durchführbar. Eine solche Vorrichtung weist eine Lastspannungsvorrichtung auf, mit welcher das zu charakterisierende Material zumindest bereichsweise mit Lastspannungen beaufschlagt werden kann. Sie weist weiter eine Feldvorrichtung auf, die geeignet ist, das zu untersuchende Material im mit der entsprechenden Lastspannung beaufschlagten Bereich mit einem magnetischen Feld zu durchsetzen. Die Durchsetzung mit dem magnetischen Feld kann hierbei durchgeführt werden, nachdem der Prozess der Beaufschlagung mit einer Lastspannung durch eine Lastspannungsvorrichtung abgeschlossen ist.

Die Vorrichtung zur Charakterisierung von Mikrogefügezuständen weist weiterhin eine Messvorrichtung auf, mit welcher eine Messgröße in Abhängigkeit von der das Material durchsetzenden magnetischen Feldstärke aufgenommen werden kann.

Die Lastspannungsvorrichtung ist vorzugsweise ein Heizelement und/oder ein Laser, da hierdurch die Beaufschlagung mit der Lastspannung besonders schnell und einfach möglich ist. Außerdem ist mit einem Laser die Beaufschlagung mit Lastspannung in einem begrenzten, sehr kleinen Bereich möglich.

Als Feldvorrichtung ist besonders geeignet und daher bevorzugt eine Spule. Auch die Messvorrichtung kann eine Spule aufweisen oder sein. Besonders präzise und mit einer guten örtlichen Auflösung kann die Messung auch mit einem Magnetfeldsensor durchgeführt werden.

Da das oben beschriebene Verfahren besonders geeignet ist, den Mikrogefügezustand eines Materials zu charakterisieren, ist es bevorzugt, wenn die Vorrichtung geeignet ist, das oben beschriebene Verfahren auszuführen.

Das erfindungsgemäße Verfahren ist also in einer Vorrichtung zur Charakterisierung von Mikrogefügezuständen durchführbar, welche aufweist: eine Lastspannungsvorrichtung, die geeignet ist, ein Material zumindest bereichsweise mit Lastspannungen zu beaufschlagen, eine Feldvorrichtung, die geeignet ist, das Material im mit der entsprechenden Lastspannung beaufschlagten Bereich mit einem magnetischen Feld zu durchsetzen, eine Messvorrichtung, die geeignet ist, eine Messgröße in Abhängigkeit von der das Material im mit der entsprechenden Lastspannung beaufschlagten Bereich durchsetzenden magnetischen Feldstärke aufzunehmen. Die Charakterisierung kann in dieser Vorrichtung dabei für mehrere Materialien gleichzeitig oder nacheinander erfolgen.

In der Vorrichtung kann die Lastspannungsvorrichtung ein Heizelement oder einen Laser aufweisen oder sein. Die Feldvorrichtung kann vorzugsweise eine Spule aufweisen oder sein. Vorzugsweise ist die Messvorrichtung eine Spule und/oder ein Magnetfeldsensor. Die Vorrichtung kann besonders bevorzugt auch zum Vergleich von Mikrogefügezuständen zumindest zweier Materialien ausgelegt sein, wobei zunächst der Mikrogefügezustand jedes Materials nach einem Verfahren nach einem der vorhergehenden Ansprüche charakterisiert wird und anschließend die charakteristischen magnetischen Feldstärken und/oder die im Wesentlichen gleichen Werte der zumindest zwei Materialien miteinander verglichen werden.

Durch die Erfindung ist es möglich, auf elektromagnetischem Wege Prüfgrößen zu ermitteln, die unabhängig von der vorherrschenden Eigenspannungssituation eine Gefügecharakterisierung gestatten. Hierdurch ist es nicht mehr erforderlich, den Spannungseinfluss durch weitere Prüfgrößen unter Inkaufnahme eines geringeren Messeffektes zu unterdrücken.

Im Folgenden soll die Erfindung anhand von Figuren beispielhaft erläutert werden.

Es zeigt
- Figur 1: bei verschiedenen Druckspannungen aufgenommene magnetische Hysteresekurven und
- Figur 2: bei verschiedenen Spannungen aufgenommene Überlagerungspermeabilitätskurven,
- Figur 3: zeigt die Barkhausenrauschamplitude in der Umgebung zweier zuvor durch Laserbestrahlung erhitzter und wieder erkalteter Punkte und
- Figur 4: die Zugeigenspannungsabhängigkeit der Längsmagnetostriktion.

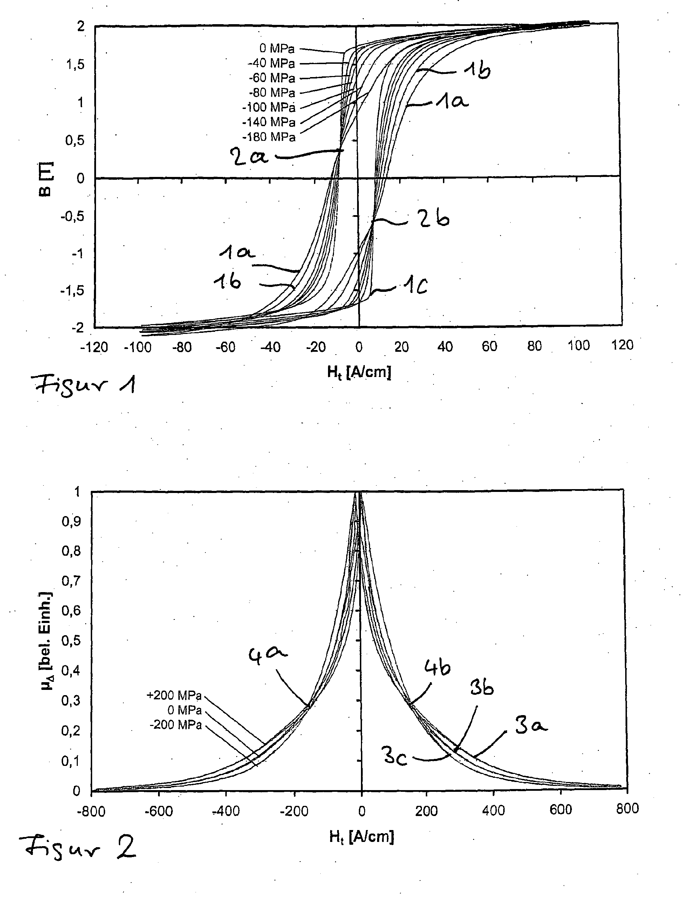

Figur 1 zeigt die magnetische Flussdichte B in Tesla in Abhängigkeit von der magnetischen Feldstärke Hₜ in Ampere pro cm. Hₜ ist diejenige Komponente der Feldstärke, die in Magnetisierungsrichtung tangential zur Werkstoffoberfläche verläuft.

Die gezeigten Kurven 1a, 1b bis 1c sind die Hysteresekurven, aufgenommen bei verschiedenen Spannungen zwischen 0 MPa und -180 MPa. Es ist deutlich zu erkennen, dass sich alle Hysteresekurven 1a, 1b bis 1c bei einer Feldstärke von Hₜ ≈ ± 8 A/cm schneiden. Diese Schnittpunkte 2a und 2b können daher zur spannungsunabhängigen Charakterisierung des Mikrogefügezustandes dienen. Die Charakterisierung kann hierbei durch den Wert der magnetischen Feldstärke Hₜ und/oder den Wert der magnetischen Flussdichte B erfolgen.

Figur 2 zeigt bei verschiedenen Spannungen aufgenommene Überlagerungspermeabilitätskurven. Hierbei ist die Überlagerungspermeabilität µ_{Δ} in beliebigen Einheiten gegen die magnetische Feldstärke Hₜ in Ampere pro cm aufgetragen. Hierbei ist die Kurve 3a bei einer Spannung von 200 MPa, die Kurve 3b bei einer Spannung von 0 MPa und die Kurve 3c bei einer Spannung von -200 MPa aufgenommen. Wieder ist deutlich zu erkennen, dass sich die drei Kurven 3a, 3b und 3c in zwei Punkten 4a und 4b, also bei einer Feldstärke von Hₜ ungefähr gleich ±150 A/cm, schneiden. Der Wert der Feldstärke Hₜ und/oder der Wert der Überlagerungspermeabilität µ_{Δ} können hier zur Charakterisierung und zum Vergleich des Materials dienen.

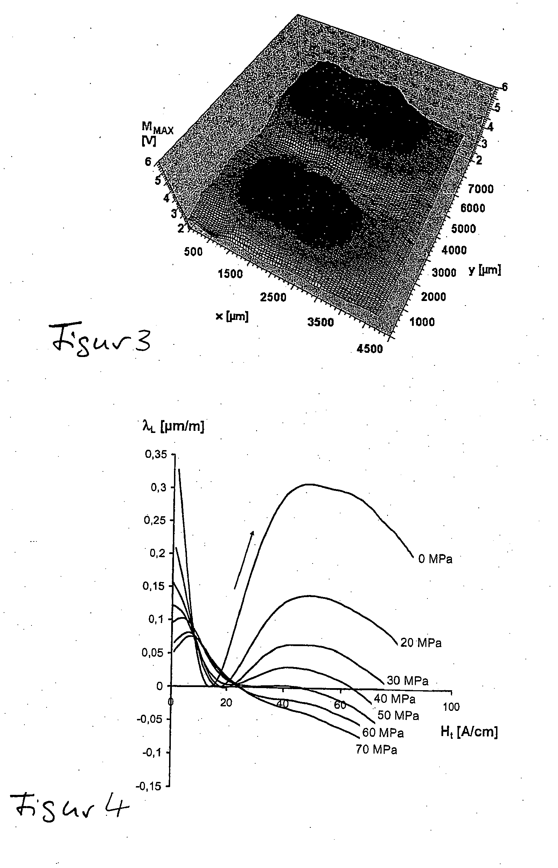

Figur 3 zeigt die maximale Barkhausenrauschamplitude in der Umgebung zweier zuvor durch Laserbestrahlung erhitzter und wieder erkalteter Punkte. Aus dieser Barkhausenrauschamplitude kann die Hysteresekurve und bestimmte Punkte der Hysteresekurve rekonstruiert werden. So ist beispielsweise das Barkhausenrauschen bei der Koerzitivfeldstärke, d.h. jener Feldstärke, bei welcher die Hysteresekurve den Wert B = 0 annimmt, maximal.

Figur 4 zeigt die Längsmagnetostriktion λ_{L} in Mikrometer pro Meter in Abhängigkeit von der magnetischen Feldstärke Hₜ in Ampere pro cm bei unterschiedlichen Zugspannungen bzw. Lastspannungen im Bereich zwischen 0 MPa und 70 MPa. Man erkennt, dass die Magnetostriktion stark von der Spannung abhängt und dadurch für die Spannungsabhängigkeiten elektromagnetischer Prüfgrößen verantwortlich ist.

## Patentansprüche

1. Verfahren zur Charakterisierung des Mikrogefügezustandes eines Materials, wobei
- das Material zumindest bereichsweise mit zumindest zwei Lastspannungen unterschiedlicher Beträge beaufschlagt wird,
- an das mit den Lastspannungen beaufschlagte Material ein Magnetfeld angelegt wird,
- für jede Lastspannung eine Messgröße in Abhängigkeit von einer variierenden magnetischen Feldstärke des Magnetfeldes aufgenommen wird,
- eine charakteristische magnetische Feldstärke bestimmt wird, bei der die Messgröße oder eine aus der Messgröße abgeleitete Größe für zumindest zwei der Lastspannungen einen im Wesentlichen gleichen Wert hat und
- der Mikrogefügezustand des Materials durch die charakteristische magnetische Feldstärke und/oder den im Wesentlichen gleichen Wert charakterisiert wird.

2. Verfahren nach dem vorhergehenden Anspruch, **dadurch gekennzeichnet, dass** die Messgröße die magnetische Flussdichte im mit der Lastspannung beaufschlagten Bereich ist.

3. Verfahren nach Anspruch 1, **dadurch gekennzeichnet, dass** die Messgröße die Überlagerungspermeabilität im mit der Lastspannung beaufschlagten Bereich ist.

4. Verfahren nach Anspruch 1, **dadurch gekennzeichnet, dass** die Messgröße das Barkhausenrauschen und/oder die Magnetostriktion im mit der Lastspannung beaufschlagten Bereich ist und dass die abgeleitete Größe die magnetische Flussdichte oder ein bestimmter Punkt der magnetischen Hysteresekurve oder die Überlagerungspermeabilität oder ein bestimmter Punkt der Überlagerungspermeabilitätskurve im entsprechenden Bereich ist.

5. Verfahren nach einem der vorhergehenden Ansprüche, **dadurch gekennzeichnet, dass** das angelegte Magnetfeld den mit der entsprechenden Lastspannung beaufschlagten Bereich durchsetzt.

6. Verfahren nach einem der vorhergehenden Ansprüche, **dadurch gekennzeichnet, dass** eine der zumindest zwei Lastspannungen den Betrag Null hat.

7. Verfahren nach einem der vorhergehenden Ansprüche, **dadurch gekennzeichnet, dass** zumindest eine der Lastspannungen durch Zugeigenspannungsfelder realisiert wird.

8. Verfahren nach einem der vorhergehenden Ansprüche, **dadurch gekennzeichnet, dass** zumindest eine der Lastspannungen dadurch beaufschlagt wird, dass das Material mittels eines Lasers in einem Bereich erwärmt wird und anschließend abkühlen gelassen wird.

9. Verfahren zum Vergleich der Mikrogefügezustände zumindest zweier Materialien, wobei zunächst der Mikrogefügezustand jedes Materials nach einem Verfahren nach einem der vorhergehenden Ansprüche charakterisiert wird und anschließend die charakteristischen magnetischen Feldstärken und/oder die im Wesentlichen gleichen Werte der zumindest zwei Materialien miteinander verglichen werden.

## Claims

1. Method for the characterisation of the micro structure condition of a material, wherein
- the material is charged at least in certain regions with at least two load induced stresses of different values,
- a magnetic field is applied to the material charged with the load induced stress,
- for every inducted stresses, a measured variable is recorded subject to a varying magnetic field intensity of the magnetic field,
- a characteristic magnetic field intensity is determined, wherein the measured variable or a size deduced from the measured variable for at least two of the load induced stresses has a value which is substantially the same.
- the micro structure condition of the material is **characterised by** means of the characteristic magnetic field intensity and/or the substantially equal value.

2. Method according to the preceding claim, **characterised in that** the measured variable is the magnetic flux density in the region that is charged with the load induced stress.

3. Method according to claim 1, **characterised in that** the measured variable is the incremental permeability in the region that is charged with the load induced stress.

4. Method according to claim 1, **characterised in that** the measured variable is the Barkhausen noise and/or the magnetostriction in the region that is charged with the load induced stress and **in that** the deduced size is the magnetic flux density or a specific point on the magnetic hysteresis curve or the incremental permeability or a specific point on the incremental permeability curve in the corresponding region.

5. Method according to one of the preceding claims, **characterised in that** the applied magnetic field passes through the region that is charged with the corresponding load induced stress.

6. Method according to one of the preceding claims, **characterised in that** one of at least two load induced stresses has a value of zero.

7. Method according to one of the preceding claims, **characterised in that** at least one of the load induced stress is implamented by regions of tensile residual stress.

8. Method according to one of the preceding claims, **characterised in that** at least one of the load induced stresses is charged by the material being heated by means of a laser in a region and subsequently being left to cool off.

9. Method for the comparison of the micro structure conditions of at least of two materials, wherein initially, the micro structure condition of each material is characterised according to a method according to one of the preceding claims and subsequently, the characteristic magnetic field intensities and/or the substantially equal values of at least two materials are compared with one another.

## Revendications

1. Procédé de caractérisation de l'état microstructural d'un matériau, dans lequel
- le matériau est, au moins par zones, sollicité par au moins deux contraintes de charge de valeurs différentes,
- un champ magnétique est appliqué au matériau sollicité par les contraintes de charge,
- pour chaque contrainte de charge, une grandeur de mesure est enregistrée en fonction d'une intensité variable du champ magnétique,
- on détermine une intensité du champ magnétique caractéristique, pour laquelle la grandeur de mesure, ou une grandeur dérivée de la grandeur de mesure, prend sensiblement la même valeur pour au moins deux des contraintes de charge, et
- on caractérise l'état microstructural du matériau par l'intensité du champ magnétique caractéristique et/ou par la valeur essentiellement identique.

2. Procédé selon la revendication précédente, **caractérisé en ce que** la grandeur de mesure est l'intensité de flux magnétique dans la zone sollicitée par la contrainte de charge.

3. Procédé selon la revendication 1, **caractérisé en ce que** la grandeur de mesure est la perméabilité avec champ statique superposé dans la zone sollicitée par la contrainte de charge.

4. Procédé selon la revendication 1, **caractérisé en ce que** la grandeur de mesure est le bruit de Barkhausen et/ou la magnétostriction dans la zone sollicitée par la contrainte de charge, et que la grandeur dérivée est la densité de flux magnétique ou un certain point de la courbe d'hystérésis magnétique ou la perméabilité avec champ statique superposé ou un certain, point de la courbe de perméabilité avec champ statique superposé dans la zone correspondante.

5. Procédé selon l'une des revendications précédentes, **caractérisé en ce que** le champ magnétique appliqué traverse la zone sollicitée par la contrainte de charge correspondante.

6. Procédé selon l'une des revendications précédentes, **caractérisé en ce que** l'une des au moins deux contraintes de charge a la valeur zéro.

7. Procédé selon l'une des revendications précédentes, **caractérisé en ce qu'**au moins l'une des contraintes de charge est réalisée par des champs de contrainte résiduelle de traction.

8. Procédé selon l'une des revendications précédentes, **caractérisé en ce qu'**au moins l'une des contraintes de charge est appliquée par le fait que le matériau est chauffé dans une zone à l'aide d'un laser, puis est abandonné pour refroidir.

9. Procédé pour la comparaison de l'état microstructural d'au moins deux matériaux, dans lequel on caractérise d'abord l'état microstructural de chaque matériau par un procédé selon l'une des revendications précédentes, puis on compare l'une à l'autre les intensités caractéristiques du champ magnétique et/ou les valeurs sensiblement identiques des au moins deux matériaux.
